# EUROPÄISCHE PATENTSCHRIFT

(11) **EP 0 445 392 B1**
(45) Veröffentlichungstag und Bekanntmachung des Hinweises auf die Patenterteilung: **02.11.1994**
(21) Anmeldenummer: 90123733.9
(22) Anmeldetag: 10.12.1990
(51) Int. Cl.: H04M 19/00, H04M 3/00

(54) **Schaltungsanordnung zur Übertragung nachrichtentechnischer Signale**
Device for transmission of telecommunication signals
Dispositif de transmission de signaux de télécommunication

(30) Priorität: 03.03.1990 DE 4006739
(43) Veröffentlichungstag der Anmeldung: 11.09.1991
(73) Patentinhaber: KE KOMMUNIKATIONS-ELEKTRONIK GMBH & CO, D-30179 Hannover (DE); ALCATEL N.V., NL-1077 XX Amsterdam (NL)
(72) Erfinder: Brahms, Martin, Dipl.-Ing., W-3000 Hannover 91 (DE)
(74) Vertreter: Döring, Roger, Dipl.-Ing.

(56) Entgegenhaltungen:
- CA-A- 1 074 034
- DE-A- 3 715 552
- US-A- 4 164 713

## Beschreibung

Die Erfindung bezieht sich auf eine Schaltungsanordnung zur Übertragung nachrichtentechnischer Signale zwischen einer Vermittlungsstelle eines Fernmeldenetzes und mindestens einem Teilnehmer, der über eine Anschlußleitung mit der Vermittlungsstelle verbunden ist, bei welcher am teilnehmerseitigen Ende der Anschlußleitung ein Gerät angeschlossen ist, in dem neben anderen passiven und aktiven Einheiten eine Gleichstromquelle und ein Übertrager mit einem Kern, einer Eingangswicklung und einer Ausgangswicklung angeordnet sind, dessen Eingangswicklung über die interne Schaltung des Geräts mit der Anschlußleitung verbunden ist und an dessen Ausgangswicklung der Teilnehmer mit einer Verbindungsleitung angeschlossen ist, bei welcher die Ausgangswicklung des Übertragers in zwei gleichgroße Teilwicklungen unterteilt ist, zwischen denen ein erster Kondensator und ein in Reihe mit demselben liegender, durch ein den Schleifenstrom detektierendes Bauteil zu betätigender Schalter angeschlossen sind, bei welcher der Übertrager mit mindestens einer Zusatzwicklung ausgerüstet ist, deren Windungszahl gleich der Summe der Windungszahlen der beiden Teilwicklungen ist und die in entgegengesetzter Richtung wie die beiden Teilwicklungen vom Strom durchflossen wird und bei welcher die Gleichstromquelle unter Zwischenschaltung der Zusatzwicklung an der Anschlußstelle des ersten Kondensators mit einer der Teilwicklungen verbunden ist (DE-A-37 15 552).

Eine solche Schaltungsanordnung wird beispielsweise bei dem sogenannten "PCM 2"-Verfahren verwendet, bei dem zwei räumlich benachbarte Teilnehmer eines Fernmeldenetzes gemeinsam über eine Anschlußleitung mit einer Vermittlungsstelle verbunden sind. Die Buchstaben "PCM" stehen für das bekannte Puls-Code-Modulations-Verfahren, mit dem nachrichtentechnische Signale als digitale Signale übertragen werden. Die weiteren Erläuterungen gelten - stellvertretend für alle möglichen anderen Anwendungsfälle der Erfindung - für dieses Verfahren.

Beim PCM 2-Verfahren werden analoge Signale in der Vermittlungsstelle digitalisiert und codiert auf die Anschlußleitung gegeben. Am Ende der Anschlußleitung ist ein Gerät installiert, in welchem die ankommenden digitalen Signale wieder decodiert und in analoge Signale umgesetzt werden. Das gilt selbstverständlich auch für die Gegenrichtung. An das Gerät sind die beiden Teilnehmer mit Verbindungsleitungen angeschlossen. Für jeden Teilnehmer ist in dem Gerät ein Übertrager vorhanden, dessen Eingangswicklung unter Zwischenschaltung eines Analog/Digitalwandlers und anderer Schaltungselemente mit der Anschlußleitung verbunden ist. An die Ausgangswicklung des Übertragers ist der jeweilige Teilnehmer mit einer Verbindungsleitung angeschlossen. Jedem Teilnehmer ist eine eigene Gleichstromquelle zur Versorgung seines Telefons zugeordnet, die auf der Ausgangsseite des Übertragers angeschlossen ist. Insbesondere dann, wenn die Teilnehmer über längere Verbindungsleitungen mit dem Gerät verbunden sind, können durch äußere elektrische und magnetische Felder Störungen induziert werden, die zum Nebensprechen bzw. Übersprechen in anderen Kanälen sowie zu Brummgeräuschen führen können.

Zur Vermeidung dieser Störungen ist bei der bekannten Schaltungsanordnung nach der eingangs erwähnten DE-A-37 15 552 die Ausgangswicklung des Übertragers in zwei gleichgroße Teilwicklungen unterteilt, zwischen denen der erste Kondensator und der in Reihe mit demselben liegende Schalter angeschlossen sind. Durch die Aufteilung der Ausgangswicklung in zwei Teilwicklungen wird die ganze Anordnung so symmetriert, daß sich für den Hin- und den Rückleiter der Verbindungsleitung gegenüber einem Bezugspotential - beispielsweise Masse - stets gleiche Verhältnisse ergeben. Durch elektrische oder magnetische Felder induzierte Störungen können sich daher nicht mehr auswirken, und zwar unabhängig von der Länge der Verbindungsleitungen. Der erste Kondensator stellt sicher, daß der eingespeiste Gleichstrom nur in der gewünschten Richtung fließt. Die beim Wählvorgang entstehenden kurzzeitigen Unterbrechungen des Speisestroms sind von dem den Schleifenstrom erkennenden Bauteil nicht schnell feststellbar, da über den ersten Kondensator zunächst weiter Strom fließt. Es kann daher geschehen, daß der Schalter in Abhängigkeit von der Kapazität des ersten Kondensators so verzögert geöffnet wird, daß eine Verzerrung der Wahlkennzeichen stattfindet. Das kann zu Fehlverbindungen führen.

Der Erfindung liegt die Aufgabe zugrunde, eine Schaltungsanordnung der eingangs geschilderten Art so weiterzubilden, daß eine Verzerrung der Wahlkennzeichen beim Wählvorgang ausgeschlossen werden kann.

Diese Aufgabe wird gemäß der Erfindung dadurch gelöst,
- daß in Reihe mit dem ersten Kondensator und dem Schalter ein zweiter Kondensator derart eingeschaltet ist, daß der Schalter zwischen den beiden Kondensatoren liegt und
- daß die die beiden Kondensatoren über den Schalter verbindende Verbindungsleitung zwischen dem Schalter und dem zweiten Kondensator mit dem Bezugspotential der Schaltungsanordnung verbunden ist.

Durch die zwischen den beiden Kondensatoren liegende Verbindung mit dem Bezugspotential ist erreicht, daß der aus der Gleichstromquelle kommende Strom bei einer Unterbrechung des Speisestroms durch Wählimpulse zum Bezugspotential abfließt. Das den Schleifenstrom detektierende Bauteil kann also ohne wesentliche Verzögerung die Unterbrechung des Schleifenstroms feststellen, so daß der zwischen den beiden Kondensatoren liegende Schalter geöffnet wird. Mit dieser durch den zweiten Kondensator ergänzten Schaltungsanordnung ist damit sichergestellt, daß die vom Teilnehmer ausgelösten Wählimpulse bzw. Wählzeichen nicht verzerrt werden. Durch Verzerrungen der Wählimpulse bedingte Fehlverbindungen können daher nicht mehr auftreten.

Ein Ausführungsbeispiel des Erfindungsgegenstandes ist in den Zeichnungen dargestellt.

Es zeigen:
Fig. 1 in schematischer Darstellung einen Ausschnitt aus einer Schaltungsanordnung zur Übertragung nachrichtentechnischer Signale mit zwei Teilnehmern.
Fig. 2 eine Schaltungsanordnung nach der Erfindung für einen Teilnehmer.

Die Erfindung wird im folgenden für das bekannte PCM 2-Verfahren erläutert, bei welchem zwei Teilnehmer über eine gemeinsame Anschlußleitung mit einer Vermittlungsstelle verbunden sind. Die Signal- bzw. Datenübertragung erfolgt dabei auf der Anschlußleitung in digitaler Form. Die Erfindung gilt aber auch für nur einen oder mehr als zwei Teilnehmer. Sie ist auch dann anwendbar, wenn die Signale bzw. Daten auf der Anschlußleitung analog übertragen werden.

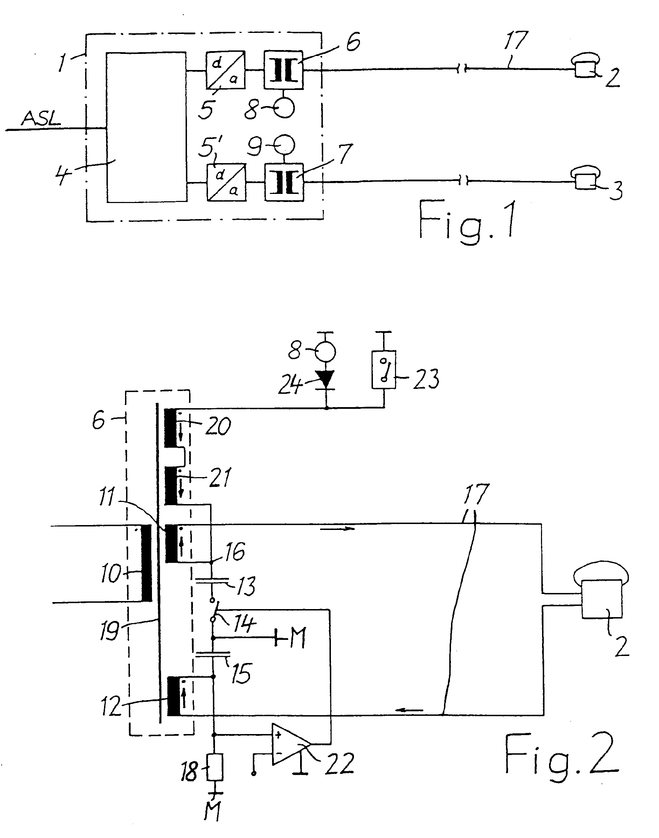

In Fig. 1 ist mit einer strichpunktierten Linie ein Gerät 1 bezeichnet, das am Ende einer Anschlußleitung ASL angeordnet ist und zum Anschluß zweier Teilnehmer 2 und 3 eines Fernmeldenetzes an eine Vermittlungsstelle dient. Über die ASL werden nachrichtentechnische Signale bzw. Daten in digitaler Form zwischen den Teilnehmern 2 bzw. 3 und der nicht dargestellten Vermittlungsstelle übertragen. Dazu ist in dem Gerät 1 eine Anzahl von aktiven und passiven Elementen angeordnet, deren Aufbau an sich bekannt ist. Diese Elemente sind in einem Kästchen 4 zusammengefaßt. In dem Gerät 1 sind auch zwei Analog/Digital-Wandler 5 und 5′ angebracht, an die Übertrager 6 bzw. 7 angeschlossen sind. An je einen der Übertrager 6 und 7 sind die Teilnehmer 2 und 3 angeschlossen. Für jeden Übertrager 6 und 7 bzw. für jeden Teilnehmer 2 und 3 ist außerdem eine Gleichstromquelle 8 bzw. 9 im Gerät 1 vorhanden, die beispielsweise mit einer Gleichspannung von 20 V gespeist werden und beispielsweise einen Strom von 28 mA liefern.

Die Schaltungsanordnung nach der Erfindung wird im folgenden für den Teilnehmer 2 erläutert. Die gleiche Wirkungsweise der Schaltungsanordnung gilt auch für den Teilnehmer 3 bzw. für nur einen Teilnehmer oder für mehr als zwei Teilnehmer:

Der Übertrager 6, der in Fig. 2 durch eine gestrichelte Linie umrahmt ist, besteht aus einer Eingangswicklung 10 und einer Ausgangswicklung, die in zwei gleichgroße Teilwicklungen 11 und 12 unterteilt ist. Die beiden Teilwicklungen 11 und 12 sind über einen ersten Kondensator 13, einen Schalter 14 und einen zweiten Kondensator 15, die in Reihe hintereinander liegen, miteinander verbunden. Der von der Gleichstromquelle 8 kommende Strom wird in die Teilwicklung 11 eingespeist, und zwar an der Stelle 16, an welcher der erste Kondensator 13 angeschlossen ist. Es fließt dann ein Strom in Richtung der eingezeichneten Pfeile über die Teilwicklung 11, den Hinleiter der Verbindungsleitung 17 zum Teilnehmer 2 und zurück über den Rückleiter der Verbindungsleitung 17 und die Teilwicklung 12 über einen ohmschen Widerstand 18 zum Bezugspotential M (Masse) der Schaltungsanordnung. Die beiden Teilwicklungen 11 und 12 werden also in gleicher Richtung vom Strom durchflossen. Für die zu übertragenden analogen Signale wirken die beiden Teilwicklungen 11 und 12 wie nur eine Wicklung, so daß die Aufteilung für die Signalübertragung kein Hindernis ist.

Durch den über die Teilwicklungen 11 und 12 fließenden Strom würde der Kern 19 des Übertragers 6 vormagnetisiert werden. Das könnte zu Verzerrungen der zu übertragenden Signale führen. Um das zu vermeiden, ist der Übertrager 6 mit mindestens einer Zusatzwicklung ausgerüstet, deren Gesamtwindungszahl gleich der Summe der Windungszahlen der beiden Teilwicklungen 11 und 12 ist. Die Zusatzwicklung besteht vorzugsweise aus zwei gleich großen Einzelwicklungen 20 und 21, die in Reihe geschaltet und zwischen der Stromquelle 8 und der Stelle 16, dem Einspeisepunkt des Stroms in die Teilwicklung 11, angeschlossen sein können. Die beiden Einzelwicklungen 20 und 21 werden in Richtung der eingezeichneten Pfeile vom Strom durchflossen, also entgegengesetzt zu den Teilwicklungen 11 und 12.

Die Drähte der Teilwicklungen 11 und 12 sowie die Drähte der Einzelwicklungen 20 und 21 werden in bevorzugter Ausführungsform gleichzeitig auf den Kern 19 gewickelt, indem vier isolierte Drähte gleichzeitig, nebeneinander (quadrofilar) aufgewickelt werden. Es wird dadurch erreicht, daß die vier Wicklungen völlig gleich und symmetrisch aufgebaut sind. Die Wirkungen der Ströme der vier Wicklungen heben sich unter Berücksichtigung des Wicklungssinns annähernd auf.

Neben der für die Signalübertragung erforderlichen Stromversorgung des Teilnehmers 2 aus der Gleichstromquelle 8 wird mit dieser Schaltungsanordnung auch eine Rufspannung übertragen. In Reihe mit dem Kondensator 13 ist der Schalter 14 gelegt, der in Abhängigkeit vom Schleifenstrom gesteuert wird. Hierzu wird der Schleifenstrom mit einem geeigneten Bauteil detektiert. Das kann beispielsweise ein Operationsverstärker 22 sein, der eine zum Gleichstrom proportionale Spannung am Widerstand 18 abgreift. Im Ruhezustand - wenn also der Teilnehmer 2 nicht telefoniert - ist der Schalter 14 geöffnet. Die von einem Rufspannungserzeuger 23 kommende, mit Gleichspannung überlagerte Wechselspannung kann also über die Zusatzwicklungen 20 und 21 und die Teilwicklung 11 zum Teilnehmer 2 übertragen werden. Sobald der Teilnehmer 2 den Handapparat seines Telefons abhebt, wird der Gleichstromkreis geschlossen und es fließt ein Schleifenstrom.

Der Schalter 14 wird dann durch ein Signal des Operationsverstärkers 22 geschlossen und die Schaltungsanordnung arbeitet wie bereits beschrieben. Der Schalter 14 ist vorzugsweise als elektronischer Schalter ausgeführt. Es kann sich dabei um einen Transistor handeln, beispielsweise um einen bipolaren Transistor. Die Diode 24 dient als Spannungsschutz für die Gleichstromquelle 8 gegenüber der Rufspannung.

Die Schaltungsanordnung nach Fig. 2 arbeitet während eines Wählvorgangs zur Herstellung einer Fernsprechverbindung wie folgt:

Wenn der Teilnehmer 2 den Hörer seines Telefonapparats abhebt, fließt im Stromkreis der Verbindungsleitung 17 der Speisestrom. Dieser wird vom Operationsverstärker 22 erkannt, so daß der Schalter 15 geschlossen wird. Die dann vom Teilnehmer 2 ausgelösten Wählimpulse bzw.

Wählzeichen ergeben kurzzeitige Unterbrechungen des Speisestroms. Der von der Gleichstromquelle 8 kommende Versorgungsstrom wird in den Pausen zwischen den Wählimpulsen, in denen kein Speisestrom fließt, über den ersten Kondensator 13 und den Schalter 14 über das Bezugspotential M abgeleitet. Es fließt dann kein Strom mehr über den Widerstand 18. Das wird vom Operationsverstärker 22 erkannt, der den Schalter 14 öffnet. Es liegt dann eine durch den zweiten Kondensator 15 ergänzte symmetrische Schaltung an der Verbindungsleitung 17. Eine Verzerrung der Wählimpulse mit entsprechender Fehlverbindung kann nicht eintreten.

Durch die Verbindung mit dem Bezugspotential M an einer zwischen dem Schalter 14 und dem zweiten Kondensator 15 liegenden Stelle ist sichergestellt, daß die Zeitkonstante der aus zweitem Kondensator 15 und Widerstand 18 bestehenden Schaltung sowohl beim Einschalten als auch beim Unterbrechen des Speisestroms gleich bleibt. Die Ladekurve und die Entladungskurve des zweiten Kodensators 15 schneiden sich bei halbem Pegel der Spannung, die sich im eingeschwungenen Zustand bei fließendem Schleifenstrom ergibt. Auf diesen Pegel wird der Operationsverstärker 22 bzw. das den Schleifenstrom detektierende Bauteil eingestellt.

Statt der einzelnen Kondensatoren 13 und 15 können jeweils auch zwei oder mehr Kondensatoren eingeschaltet werden.

## Patentansprüche

1. Schaltungsanordnung zur Übertragung nachrichtentechnischer Signale zwischen einer Vermittlungsstelle eines Fernmeldenetzes und einem Teilnehmer (2), der über eine Anschlußleitung (ASL) mit der Vermittlungsstelle verbunden ist, bei welcher am teilnehmerseitigen Ende der Anschlußleitung ein Gerät (1) angeschlossen ist, in dem neben anderen passiven und aktiven Einheiten eine Gleichstromquelle (8) und ein Übertrager (6) mit einem Kern (19), einer Eingangswicklung (10) und einer Ausgangswicklung (11,12) angeordnet sind, dessen Eingangswicklung über die interne Schaltung des Geräts mit der Anschlußleitung verbunden ist und an dessen Ausgangswicklung der Teilnehmer mit einer Verbindungsleitung (17) angeschlossen ist, bei welcher die Ausgangswicklung des Übertragers in zwei gleichgroße Teilwicklungen (11,12) unterteilt ist, zwischen denen ein erster Kondensator (13) und ein in Reihe mit demselben liegender, durch ein den Schleifenstrom detektierendes Bauteil (22) zu betätigender Schalter (14) angeschlossen sind, bei welcher der Übertrager mit mindestens einer Zusatzwicklung (20,21) ausgerüstet ist, deren Windungszahl gleich der Summe der Windungszahlen der beiden Teilwicklungen ist und die in entgegengesetzter Richtung wie die beiden Teilwicklungen vom Strom durchflossen wird, und bei welcher die Gleichstromquelle an der Anschlußstelle des ersten Kondensators mit einer der Teilwicklungen verbunden ist, dadurch gekennzeichnet,
- daß in Reihe mit dem ersten Kondensator (13) und dem Schalter (14) ein zweiter Kondensator (15) derart eingeschaltet ist, daß der Schalter (14) zwischen den beiden Kondensatoren (13,15) liegt und
- daß die die beiden Kondensatoren (13,15) über den Schalter (14) verbindende Verbindungsleitung zwischen dem Schalter (14) und dem zweiten Kondensator (15) mit dem Bezugspotential (M) der Schaltungsanordnung verbunden ist.

2. Schaltungsanordnung nach Anspruch 1, dadurch gekennzeichnet, daß als Schalter (14) ein Transistor, vorzugsweise ein bipolarer Transistor, eingesetzt ist.

## Claims

1. Circuit arrangement for the transmission of information signals between an exchange of a telecommunication network and a subscriber (2), who is connected to the exchange via a subscriber line (ASL), in which arrangement there is connected at the subscriber end of the subscriber line a device (1) in which there are arranged, in addition to other passive and active units, a direct-current source (8) and a repeating coil (6) with a core (19), an input winding (10) and an output winding (11,12), the input winding of which device is connected via the internal circuit of the device to the subscriber line and to the output winding of which device the subscriber is connected by a junction line (17), in which arrangement the output winding of the repeating coil is subdivided into two part-windings (11,12) of equal size, between which there are connected a first capacitor (13) and a switch (14), which is in series with the said capacitor and is to be operated by a component (22) detecting the loop current, in which arrangement the repeating coil is equipped with at least one additional winding (20,21), the number of windings of which is equal to the sum of the numbers of windings of the two part-windings and which is flowed through by current in the opposite direction to the two part-windings, and in which arrangement the direct-current source is connected at the junction of the first capacitor to one of the part-windings, characterized
- in that a second capacitor (15) is connected in series with the first capacitor (13) and the switch (14) in such a way that the switch (14) lies between the two capacitors (13,15) and
- in that the junction line connecting the two capacitors (13,15) via the switch (14) is connected between the switch (14) and the second capacitor (15) to the reference potential (M) of the circuit arrangement.

2. Circuit arrangement according to Claim 1, characterized in that a transistor, preferably a bipolar transistor, is used as the switch (14).

## Revendications

1. Circuit pour transmettre des signaux de la technique des télécommunications entre un central d'un réseau téléphonique et un abonné (2) qui est relié au central par l'intermmédiaire d'une ligne d'abonné (ASL), circuit dans le cas duquel à l'extrémité située du côté abonné de la ligne d'abonné est relié un appareil (1) dans lequel, en plus d'autres organes passifs et actifs, sont disposés une source de courant continu (8) et un translateur (6) qui présente un noyau (8), un bobinage d'entrée (10) et un bobinage de sortie (11, 12), dont le bobinage d'entrée est relié, par l'intermédiaire du circuit intérieur de l'appareil, avec la ligne d'abonné et au bobinage de sortie duquel l'abonné est relié par une ligne de liaison (17), dans le cas duquel le bobinage de sortie du translateur est divisé en deux bobinages partiels (11, 12) de même grandeur entre lesquels sont reliés un premier condensateur (13) et un interrupteur (14) qui est monté en série avec ce condensateur et que doit actionner un composant (22) détectant le courant de ligne, dans le cas duquel le translateur est équipé d'au moins un bobinage supplémentaire (20, 21) dont le nombre de spires est égal à la somme des nombres de spires des deux bobinages partiels et qui est parcouru par le courant en sens opposé aux deux bobinages partiels, et dans le cas duquel la source de courant continu est reliée à la position de raccordement entre le premier condensateur et l'un des bobinages partiels, caractérisé par le fait
- qu'en série avec le premier condensateur (13) et l'interrupteur (14) est monté un second condensateur (15), que l'interrupteur (14) se trouve entre les deux condensateurs (13, 15) et
- que la ligne de liaison qui relie les deux condensateurs (13, 15) par l'intermédiaire de l'interrupteur (14) est reliée avec le potentiel de référence (M) du circuit entre l'interrupteur (14) et le second condensateur (15).

2. Circuit selon la revendication 1, caractérisé par le fait que comme interrupteur (14) on utilise un transistor, de préférence un transistor bipolaire.
